# EUROPÄISCHE PATENTSCHRIFT

(11) **EP 2 300 280 B1**
(45) Veröffentlichungstag und Bekanntmachung des Hinweises auf die Patenterteilung: **13.01.2016**
(21) Anmeldenummer: 09780466.0
(22) Anmeldetag: 10.07.2009
(51) Int. Cl.: B60R 25/021, B60R 25/0215, B60R 25/20, B60R 25/24

(54) **VERFAHREN ZUM BETRIEB EINES STEUERUNGSSYSTEMS EINES MOTORRADS**
METHOD FOR OPERATING OF A CONTROL SYSTEM OF A MOTORCYCLE
PROCÉDÉ SERVANT À COMMANDER LE SYSTÈME DE DIRECTION D'UNE MOTO

(30) Priorität: 11.07.2008 DE 102008032586
(43) Veröffentlichungstag der Anmeldung: 30.03.2011
(60) Teilanmeldung: 13190738.8
(73) Patentinhaber: Huf Hülsbeck & Fürst GmbH & Co. KG, 42551 Velbert (DE)
(72) Erfinder: MÖNIG, Stefan, 58332 Schwelm (DE); SCHINDLER, Mirko, 42549 Velbert (DE); KLEIN, Matthias, 85221 Dachau (DE); SIMON, Jörg, 42489 Wülfrath (DE)
(74) Vertreter: Vogel, Andreas
(86) Internationale Anmeldenummer: PCT/EP2009/058865
(87) Internationale Veröffentlichungsnummer: WO 2010/004045

(56) Entgegenhaltungen:
- DE-A1- 10 356 660
- DE-A1-102005 062 685
- US-A- 5 343 077
- US-A1- 2004 090 306
- US-A1- 2006 261 673
- US-A1- 2006 261 674
- US-A1- 2006 261 675

## Beschreibung

Die Erfindung betrifft ein Verfahren zum Betrieb eines Steuerungssystems eines Motorrads zur Überführung einer elektromechanischen Lenkungsverriegelung von einer Entriegelungsstellung in eine Verriegelungsstellung und umgekehrt, mit einer Zündanlage zum Motorstart des Motorrads, die durch das Steuerungssystem angesteuert wird, einer Authentifizierung, bei dem ein ID-Geber mit dem Steuerungssystem in Datenkommunikation steht, wobei nach einer positiven Authentifizierung in einem Aktionsvorgang die Lenkungsverriegelung in die jeweilige Stellung gebracht wird.

In der DE 100 49 442 A1 ist ein System für die Herstellung einer Fahrberechtigung vor dem Motorstart eines Motorrades offenbart. Durch eine Betätigung eines Starttasters am Lenker des Motorrads wird eine Authentifizierung gestartet, indem ein Anforderungssignal vom Motorrad zum ID-Geber gesandt wird. Ist der ID-Geber als gültig identifiziert, das bedeutet, falls die Authentifizierung positiv verläuft, das heißt, dass der elektronische Code des ID-Gebers mit dem motorradseitigen Code übereinstimmt, wird die Lenkungsverriegelung, insbesondere die elektromechanische Wegfahrsperre deaktiviert. Für einige Anwendungsfälle hat sich gezeigt, dass trotz einer positiven Authentifizierung ein unmittelbar vom Benutzer nicht beeinflussbarer Entriegelungs- oder Verriegelungsvorgang nicht gewünscht ist. Ein Beispiel hierfür ist, dass bei einer Motorabschaltung des Motorrads und nach einem Absteigen des Motorradfahrers es beispielsweise gewünscht sein kann, dass das Motorrad in einem unverriegelten Zustand verbleiben soll, weil es beispielsweise noch einige Meter in die endgültige Parkposition, insbesondere in die Garage, mit abgeschaltetem Motor durch den Benutzer bewegt werden soll.

Das Dokument US-A-5343077 wird als nächstliegender Stand der Technik angesehen.

Es ist Aufgabe der vorliegenden Erfindung, ein Verfahren zum Betrieb eines Steuerungssystems eines Motorrads zur Überführung einer elektromechanischen Lenkungsverriegelung in ihre jeweilige Stellung zu schaffen sowie eine dazu gehörige Anordnung bereit zu stellen, bei der die genannten Nachteile vermieden werden, wodurch der Einsatzbereich der Lenkuhgsverriegelung erweitert wird.

Zur Lösung dieser Aufgabe wird ein Verfahren mit den Merkmalen des Anspruchs 1 vorgeschlagen. In den abhängigen Ansprüchen sind bevorzugte Weiterbildungen ausgeführt.

Dazu ist erfindungsgemäß vorgesehen, dass das Verfahren mit einem mit dem Steuerungssystem in Signalverbindung stehendem ersten Betätigungselement, das für einen Benutzer zugänglich ist, vorgesehen ist und der Aktionsvorgang erst nach der positiven Authentifizierung über eine bewusste, nach der Authentifizierung nachgeschalteten Aktivierung des ersten Betätigungselementes startet. Die Authentifizierung kann sowohl unbewusst als auch durch eine bewusste Aktivierung über das erste Betätigungselement gestartet werden. Befindet sich der Benutzer mit dem ID-Geber in einer definierten Nähe zum Motorrad, erfolgt über eine bidirektionale Kommunikation zwischen dem ID-Geber und dem Motorrad, insbesondere dem Steuerungssystem und/oder der elektromechanischen Lenkungsverriegelung eine Überprüfung, inwieweit der elektronische Code des ID-Gebers mit dem elektronischen, gespeicherten Code des Motorrades übereinstimmt. Hierbei kann die bidirektionale Kommunikation auf optischen, induktiven oder kapazitiven Wege oder in einer weiteren Alternative durch eine Funkübertragung erfolgen. Nachdem eine positive Authentifizierung festgestellt wurde, muss nun der Benutzer durch eine bewusste Aktivierung des ersten Betätigungselementes den eigentlichen Aktionsvorgang, insbesondere den Verriegelungsvorgang oder den Entriegelungsvorgang starten. Falls der Benutzer nach einem positiven Authentifizierungsvorgang das Betätigungselement nicht aktiviert, verbleibt die Lenkungsverriegelung in ihrer aktuellen Stellung. Das bedeutet, wenn der Motor des Motorrads abgeschaltet worden ist, und keine separate Aktivierung des Betätigungselementes durch den Benutzer erfolgt, verbleibt die Lenkungsverriegelung des Motorrads in der Entriegelungsstellung. Gemäß dieses Beispiels ist hinzuzufügen, dass während der Motor des Motorrads eingeschaltet ist, parallel hierzu in definierten Zeitabständen stets ein Vorgang der Authentifizierung stattfindet.

In einer bevorzugten Ausführungsform der Erfindung wird über eine erneute bewusste Aktivierung eines zweiten Betätigungselements nach dem Aktionsvorgang, bei dem die Lenkungsverriegelung in die Entriegelungsstellung gebracht wurde, ein Bereitstellungsvorgang initiiert, bei dem Energie der Zündanlage des Motorrads zur Verfügung gestellt wird, wobei insbesondere über eine erneute Aktivierung eines dritten Betätigungselementes der Motorstartvorgang aktiviert wird. Das bedeutet, dass der Benutzer durch eine zweimalige Betätigung des jeweiligen Betätigungselementes den Motorstartvorgang auslösen kann.

Vorteilhafterweise, überprüft das Steuerungssystem während des Aktionsvorgangs eine Ist-Stellung der Lenkungseinheit mit einer Soll-Stellung, wobei falls die Ist-Stellung der Soll-Stellung entspricht, wird die Lenkungsverriegelung aus der Entriegelungsstellung in die Verriegelungsstellung gebracht. Falls die Ist-Stellung ungleich der Soll-Stellung ist, wird der Aktionsvorgang, insbesondere der Verriegelungsvorgang abgebrochen. Zweckmäßigerweise erhält der Benutzer bei einem Abbruch des Aktionsvorgangs eine Rückmeldung über eine Fehlstellung der Lenkungseinheit. Die Rückmeldung kann beispielsweise über ein Display an der Lenkungseinheit erfolgen. Ebenfalls ist eine Rückmeldung auf akustischem Wege denkbar. Falls der Lenker der Lenkereinheit sich nicht in einer definierten, eingeschlagenen Lenkerposition befindet, erfolgt somit keine Überführung der Lenkungsverriegelung von der Entriegelungsstellung in die Verriegelungsstellung. Diese Überprüfung kann beispielsweise über Tasterelemente, Sensoren etc. detektiert werden, die mit dem Steuerungssystem in Datenkommunikation stehen.

In einer weiteren vorteilhaften Ausführungsform der Erfindung wird während des Motorbetriebs ein Motorabschaltvorgang über eine bewusste Aktivierung eines vierten Betätigungselementes ausgelöst, wobei das Steuerungssystem der Zündanlage die Bereitstellung der Energie unterbricht. Hierbei wird der Motorabschaltvorgang nur unter definierten Motorradzustandsbedingungen, die vom Steuerungssystem überprüft werden, ausgelöst. Eine mögliche Zustandsbedingung kann beispielsweise sein, dass das Motorrad eine Geschwindigkeit von 0 km/h aufweisen muss, das bedeutet, dass es steht. Über eine erneute Aktivierung eines fünften Betätigungselementes nach dem Motorabschaltvorgang, erfolgt die Bordelektronikabschaltung, bei der beispielsweise die Elektronik des Displays abgeschaltet wird. Das Motorrad befindet sich nun in einem derartigen Zustand, dass der Motor abgeschaltet ist und nur eine "Restelektronik" mit Strom versorgt ist, die unter anderem für die noch aktiv ablaufende Authentifizierung sorgt oder die Lenkungsvorrichtung mit Energie versorgen kann. Die Lenkungsverriegelung des Motorrads befindet sich hierbei noch in ihrer Entriegelungsstellung. Der Benutzer kann nun durch eine weitere Aktivierung des ersten oder des zweiten Betätigungselementes die Lenkungsverriegelung über den Aktionsvorgang in die Verriegelungsstellung bringen.

Vorteilhafterweise bilden das erste, das zweite und das vierte Betätigungselement ein gemeinsames Zentralbetätigungselement, welches an der Lenkungseinheit des Motorrads frei zugänglich für den Benutzer angeordnet ist. Die genannten Betätigungselemente können als Taster, Schalter, Näherungs- oder Berührungsschalter etc. ausgebildet sein. Ferner können die Betätigungsdauern des Zentralbetätigungselementes zur Aktivierung des Aktionsvorganges und des Bereit-stellungsvorgangs sich unterscheiden. Auch die Betätigungsdauern des Aktions-vorgangs und der Bordelektronikabschaltung können unterschiedlich sein. Das bedeutet, dass beispielsweise über eine lange Betätigung des Zentralbetätigungselementes der Aktionsvorgang ausgelöst werden kann. Über eine kurze Betätigung des Zentralbetätigungselementes kann der Bereitstellungsvorgang oder die Bordelektronikabschaltung erfolgen. Um eine kurze und eine lange Betätigung erkennen zu können, können im Zentralbetätigungselement unterschiedliche Sensoren, insbesondere Kapazitätssensoren oder Piezosensoren zum Einsatz kommen. Falls nach dem Aktionsvorgang in einem definierten Zeitintervall keine Aktivierung des Zentralbetätigungselementes oder eines der Betätigungselemente erfolgt, schaltet das Steuerungssystem in einen Ruhemodus.

Die Aufgabe wird ferner gelöst durch eine Anordnung zur Ansteuerung einer Lenkungsverriegelung mit einem Sperrglied eines funktionswesentlichen Bauteils, insbesondere einer Lenksäule eines Motorrads, mit einem Getriebe, das mit dem Sperrglied in mechanischer Wirkverbindung steht, wobei das Sperrglied in einem Aktionsvorgang zwischen einer Verriegelungsstellung und einer Entriegelungs-stellung bewegbar ist, mit einem Authentifizierungsvorgang, bei dem ein ID-Geber mit einem Steuerungssystem in Datenkommunikation steht, wobei nach einer positiven Authentifizierung in dem Aktionsvorgang die Lenkungsverriegelung in die jeweilige Stellung bringbar ist, bei der in der Verriegelungsstellung das Sperrglied in das funktionswesentliche Bauteil eingreift und in der Entriegelungsstellung das Sperrglied lösgelöst vom funktionswesentlichen Bauteil ist, wobei ein für einen Benutzer zugängliches Betätigungselement vorgesehen ist, wodurch über eine bewusste Aktivierung des Betätigungselementes der Aktionsvorgang startet. Erfindungsgemäß ist das Steuerungssystem mit der Lenkungsverriegelung derart in Datenkommunikation, dass der Aktionsvorgang erst über eine bewusste, nach der positiven Authentifizierung nachgeschalteten Aktivierung des Betätigungselementes ausgelöst wird. In den abhängigen Ansprüchen 12 bis 15 sind bevorzugte Weiterbildungen ausgeführt.

Weitere Vorteile, Merkmale und Einzelheiten der Erfindung ergeben sich aus der nachfolgenden Beschreibung, in der unter Bezugnahme auf die Zeichnungen eine mögliche Ausführungsform der Erfindung beschrieben ist. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäßes Verfahren zum Betrieb eines Steuerungssystems eines Motorrads zur Überführung einer elektromechanischen Lenkungsverriegelung in ihre jeweilige Stellung,
- Figur 2: eine erfindungsgemäße Anordnung zur Ansteuerung einer Lenkungsverriegelung eines Motorrads,
- Figur 3: eine weitere Darstellung des Verfahrens gemäß Figur 1,
- Figur 4: eine weitere Darstellung des Verfahrens gemäß Figur 1,
- Figur 5: eine schematische Ansicht der Lenkungsverriegelung, die gemäß des Verfahrens nach Figur 1 angesteuert wird,
- Figur 6: die Lenkungsverriegelung gemäß Figur 5 in einer weiteren Ansicht,
- Figur 7: eine Seitenansicht der Lenkungsverriegelung gemäß Figur 5,
- Figur 8: eine weitere Seitenansicht der Lenkungsverriegelung gemäß Figur 5,
- Figur 9: eine weitere Ansicht der Lenkungsverriegelung gemäß Figur 5,
- Figur 10: eine weitere Ansicht der Lenküngsverriegelung gemäß Figur 5,
- Figur 11: eine weitere Ansicht der Lenkungsverriegelung gemäß Figur 5 und
- Figur 12: eine weitere Ansicht der Lenkungsverriegelung gemäß Figur 5.

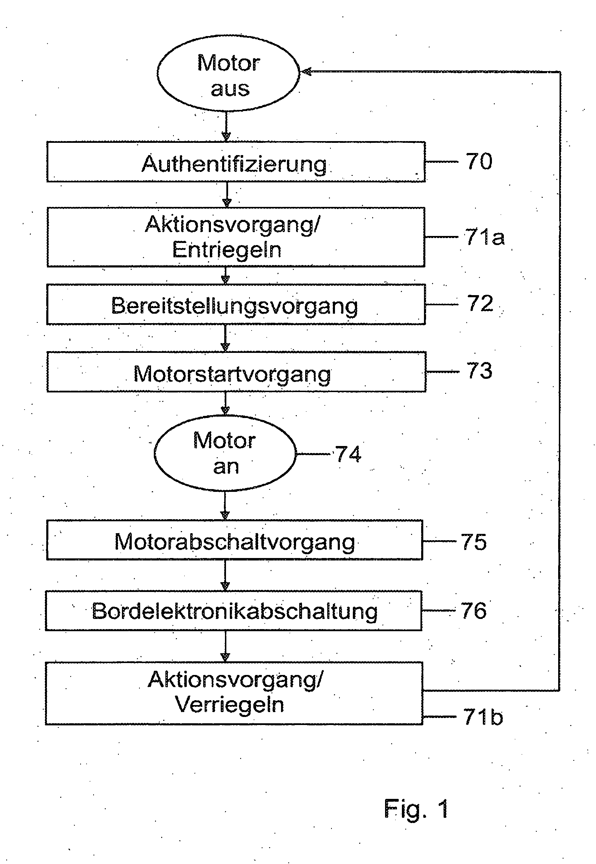

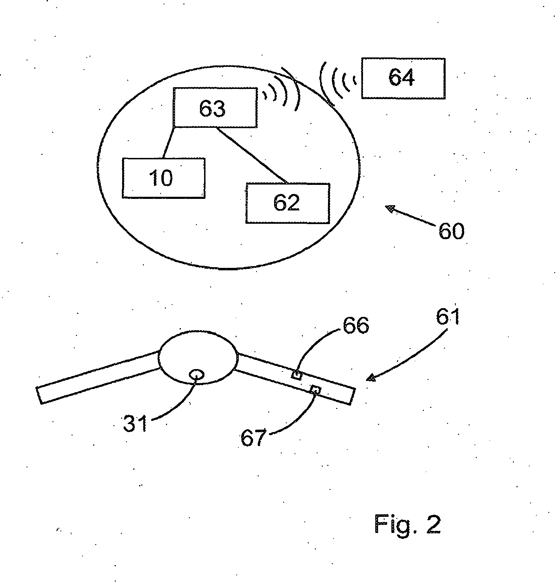

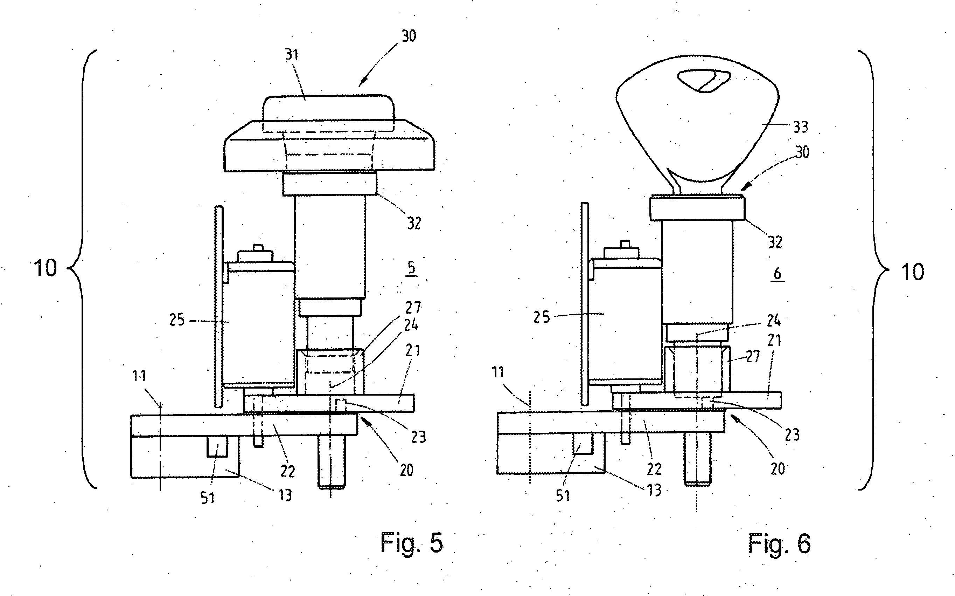

Figur 1 stellt rein schematisch, in vereinfachter Darstellung das erfindungsgemäße Verfahren zum Betrieb eines Steuerungssystems 63 eines Motorrads zur Überführung einer elektromechanischen Lenkungsverriegelung 10 von einer Entriegelungsstellung 2 in eine Verriegelungsstellung 1 dar, die in den Figuren 5 bis 12 gezeigt sind. Figur 1 geht von einem ausgeschalteten Motor des Motorrads 60 aus (gemäß Figur 2). Nähert sich der potentielle Benutzer (Motorradfahrer) mit einem ID-Geber 64 dem Motorrad 60, startet ab einem definierten Abstand zum Motorrad 60 "automatisch" eine Authentifizierung 70, bei der überprüft wird, inwieweit der im ID-Geber 64 enthaltene Code dem motorradseitigen Code entspricht. Der Vorgang der Authentifizierung 70 kann unbewusst beispielsweise durch Bewegen des Motorradständers, Kontaktieren des Motorradsitzes etc. ausgelöst werden. Ebenfalls ist es denkbar, dass die Authentifizierung 70 über eine bewusste Handlung gestartet wird, zum Beispiel durch eine Betätigung eines Schalters oder Tasters oder eines Motorstartschalters, auf den im folgenden noch eingegangen wird. Der ID-Geber 64 ist mit einem Steuerungssystem 63 des Motorrads 60 in Datenkommunikation. Das Steuerungssystem 63 ist ferner mit einer elektromechanischen Lenkungsverriegelung 10 sowie einer Zündanlage 62 zum Motorstart des Motorrads 60 in Signalverbindung.

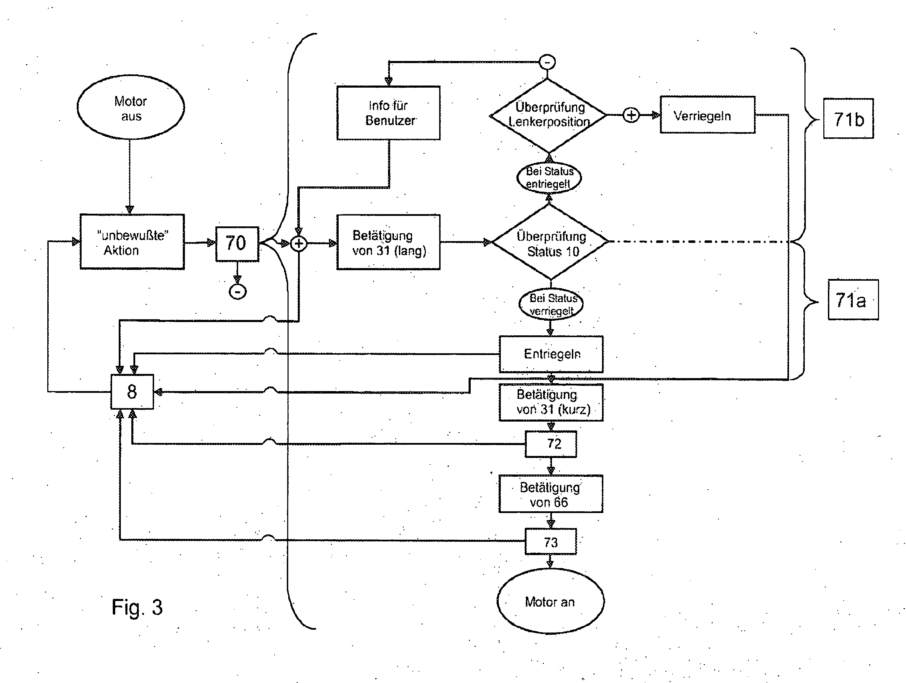

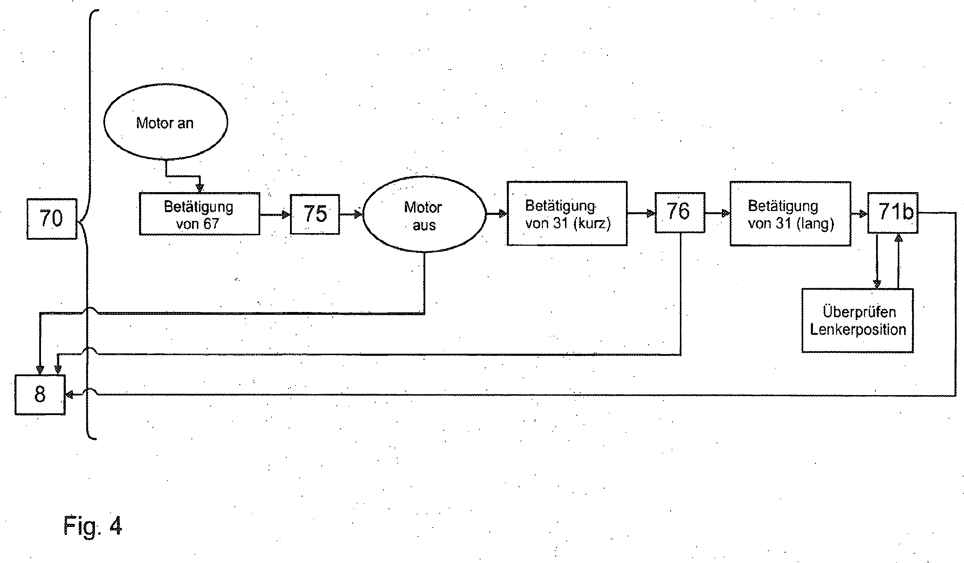

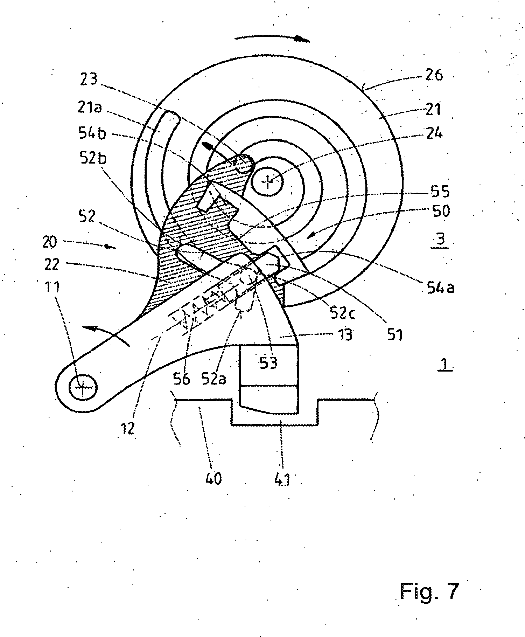

Nach einer positiven Authentifizierung 70 kann über eine Aktivierung eines Betätigungselementes 31, das mit dem Steuerungssystem 63 in Signalverbindung steht, ein Aktionsvorgang 71a, 71b, der in Figur 3 und Figur 4 im Ablaufdiagramm schematisch dargestellt ist, ausgelöst werden. Bei dem Aktionsvorgang 71a, 71b wird die Lenkungsverriegelung 10 von ihrer Entriegelungsstellung 2 in eine Verriegelungsstellung 1 oder umgekehrt gebracht, welches insbesondere in den Figuren 7 bis 12 dargestellt ist. Gemäß des dargestellten Ausführungsbeispiels ist das Betätigungselement 31 an der Lenkungseinheit 61 des Motorrads 60 angeordnet (siehe Figur 2). Der Benutzer muss zur Entriegelung des Motorrads 60 - nach der positiven Authentifizierung 70 - bewusst das Betätigungselement 31 aktivieren, damit die Lenkungsverriegelung 10 entsprechend angesteuert wird. Im vorliegenden Ausführungsbeispiel wird der Aktionsvorgang 71a zur Entriegelung der Lenkungsverriegelung 10 über ein längeres Betätigen des Betätigungselementes 31 ausgelöst. Gemäß Figur 3 überprüft zunächst das Steuerungssystem 63, inwieweit die Lenkungsverriegelung 10 sich in der Entriegelungsstellung 2 oder in der Verriegelungsstellung 1 befindet. Befindet sich die Lenkungsverriegelung 10 in einer Verriegelungsstellung 2, erfolgt eine Entriegelung 71a der Lenkungsverriegelung 10.

Über eine erneute, bewusste Aktivierung des Betätigungselementes 61 nach dem genannten Aktionsvorgang 71a wird ein Bereitstellungsvorgang 72 initiiert, bei dem Energie der Zündanlage 62 zur Verfügung gestellt wird. Verglichen zur Betätigungsdauer zur Auslösung des genannten Aktionsvorgangs 71a zur Entriegelung der Lenkungsverriegelung 10, ist die Betätigungsdauer zur Aktivierung des Bereitstellungsvorgangs 72 kürzer. Über eine erneute Aktivierung des Motorstartschalters 66 gemäß Figur 2 wird der Motorstartvorgang 73 aktiviert.

Wie Figur 3 verdeutlicht, wird in bestimmten Zeitintervallen sich wiederholend der Vorgang der Authentifizierung 70, während des Aktionsvorganges 71 a, 71 b, des Bereitstellungsvorgangs 72, des Motorstartvorgangs 73 sowie während der Motor des Motorrads 60 im eingeschalteten Zustand ist, durchgeführt.

Gemäß des Ausführungsbeispiels wechselt das Steuerungssystem 63 die Stellung der Lenkungsverriegelung 10 während des Aktionsvorgangs 71a, 71b in Abhängigkeit von der aktuellen Stellung der Lenkungsverriegelung 10. Das bedeutet, dass bei der Aktivierung des Betätigungselementes 31 zur Auslösung eines Aktionsvorgangs 71a, 71b, das Steuerungssystem 63 zunächst überprüft, welche Stellung 1,2 die Lenkungsverriegelung 10 aktuell aufweist. Befindet sich die Lenkungsverriegelung 10 in einer Verriegelungsstellung 1 wird entriegelt, befindet sich die Lenkungsverriegelung 10 in der Entriegelungsstellung 2 wird verriegelt. Der Aktionsvorgang 71b der Verriegelung erfolgt in der Art, dass das Steuerungssystem 63 während des Aktionsvorgangs 71b eine Ist-Stellung der Lenkungseinheit 61 mit einer Soll-Stellung überprüft. Falls die Ist-Stellung der Soll-Stellung entspricht, wird die Lenkungsverriegelung 10 aus der Entriegelungsstellung 2 in die Verriegelungsstellung 1 gebracht. Falls die Ist-Stellung ungleich der Soll-Stellung ist, wird der Aktionsvorgang 71b abgebrochen und der Benutzer erhält eine Information oder eine Rückmeldung, dass eine Fehlstellung der Lenkungseinheit 61 vorliegt (siehe Figur 3). Eine Verriegelung kann somit nur stattfinden, wenn die Lenkungseinheit 61 in einer definierten Stellung eingeschlagen ist.

Um den laufenden Motor des Motorrads 60 abzuschalten, ist eine bewusste Aktivierung des Notausschalters 67 notwendig (siehe Figur 2), bei der das Steuerungssystem 63 der Zündanlage 62 die Bereitstellung der Energie unterbricht. Der Motor befindet sich anschließend im abgeschalteten Zustand, wobei der Motorabschaltvorgang 75 nur unter definierten Motorradzustandsbedingungen, die vom Steuerungssystem 63 überprüft werden, möglich ist. Gemäß Figur 4 kann nun nach dem Motorabschaltvorgang 75 über eine erneute Aktivierung des Betätigungselementes 31 die Bordelektronikabschaltung 76 erfolgen. Anschließend kann der Benutzer, wenn es gewünscht ist, durch eine erneute, längere Aktivierung des Betätigungselementes 31 den Aktionsvorgang 71 b zur Verriegelung der Lenkungsverriegelung 10 auslösen. Parallel hierzu erfolgt eine Überprüfung, inwieweit die Lenkungseinheit 61 ihre entsprechende Soll-Stellung aufweist. Wie Figur 4 verdeutlicht, wiederholt das Steuerungssystem 63 die Authentifizierung 70 während des Motorabschaltvorgangs 75, während der Bordelektronikabschaltung 76 sowie beim Aktionsvorgang 71b zur Verriegelung der Lenkungsverriegelung 10. Wie Figur 3 und Figur 4 zeigen, kann das Steuerungssystem 63 in einen Ruhemodus 77 schalten, falls eine entsprechende Aktivierung des jeweiligen Betätigungselementes unterbleibt. Befindet sich das Verfahren in dem Ruhemodus 77, unterbleibt ein ständig wiederholender Authentifizierungsvorgang.

Die Figuren 7 bis 12 zeigen ein mögliches Ausführungsbeispiel einer Lenkungsverriegelung 10, die über das beschriebene Verfahren angesteuert wird. Die Lenkungsverriegelung 10 weist ein Sperrglied 13 auf, das ein funktionswesentliches Bauteil 40, hier eine Lenksäule 40 des Motorrads 60 blockieren kann.

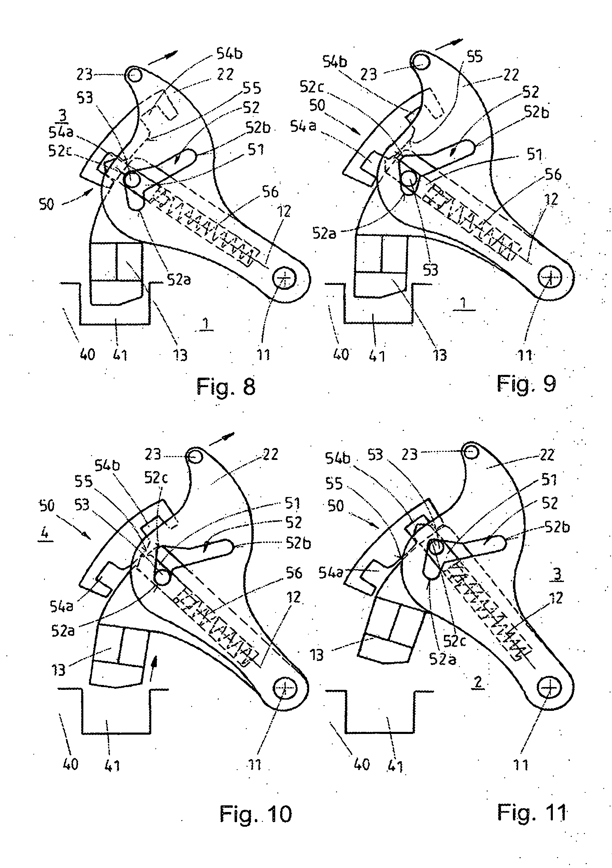

Die Lenkungsverriegelung 10 weist ein Getriebe 20 auf, das mit dem Sperrglied 13 in mechanischer Kopplung steht. In den Figuren 7 und 8 befindet sich das Sperrglied 13 in einer Verriegelungsstellung 1. Über das Getriebe 20 ist die Lenkungsver- . riegelung 10, insbesondere das Sperrglied 13 aus der Verriegelungsstellung 1 in eine Entriegelungsstellung 2 bewegbar, die in Figur 11 dargestellt ist. In der Verriegelungsstellung 1 ragt das Sperrglied 13 mit seinem freien Ende in eine Nut 41 der Lenksäule 40 hinein, wodurch die Lenksäule 40 gesperrt ist. Im Gegensatz dazu ist das Sperrglied 13 in der Entriegelungsstellung 2 losgelöst von der Lenksäule 40.

Das Getriebe 20 weist ein Übertragungsglied 21 auf, das als Antriebsrad ausgeführt. ist und an einer Achse 24 drehbar gelagert ist. Das Übertragungsglied 21 wird über einen elektronischen Motor 25, der in Figur 5 und Figur 6 dargestellt ist, angetrieben. Der elektronische Motor 25 weist ein Ritzel auf, das auf einen Verzahnungsbereich 26 des Übertragungsgliedes 21 eingreift. Die Drehachse 24 des Übertragungsgliedes 21 sowie die nicht dargestellte Drehachse des Ritzels liegen parallel zueinander, wodurch eine Stirnradverzahnung zwischen dem Verzahnungsbereich 26 des Übertragungsgliedes 21 und dem Ritzel des Elektromotors 25 vorliegt.

Wie in Figur 5 und Figur 6 verdeutlicht ist, ist eine für einen Benutzer zugängliche Betätigungseinheit 30 vorgesehen, die in einem Normalbetrieb mit dem Getriebe 20 in Signalverbindung steht. Über eine bewusste Aktivierung der Betätigungs-elements 31 wird das Getriebe 20 elektronisch angesteuert, wodurch das Sperrglied 13 in seine jeweilige Stellung 1, 2 gebracht wird, welches im Folgenden anhand der Figuren 8 bis Figur 12 erklärt wird. Wie in Figur 5 gezeigt ist, ist die Betätigungseinheit 30 vom Getriebe 20 mechanisch entkoppelt. Für einen Notfallbetrieb, bei dem keine elektronische Versorgung der wesentlichen Bauteile vorliegt, kann die Betätigungseinheit 30 mit dem Getriebe 20 mechanisch gekoppelt werden, in dem ein Notschlüssel 33 in einen Aufnahmekörper 32, insbesondere Schließzylinder der Betätigungseinheit 30 geführt wird (siehe Figur 6). Der Aufnahmekörper 32 ist durch ein Betätigungselement 31 verdeckt, welches in Figur 5 zu erkennen ist. Dieses Betätigungselement 31 muss zunächst entfernt, verschwenkt oder in einer weiteren Alternative von dem Aufnahmekörper 32 wegbewegt werden, bevor der Notschlüssel 33 in den Aufnahmekörper 32 eingeführt wird.

Die Betätigungseinheit 30 ist in Figur 5 in einer Ruhelage 5 dargestellt. In dieser Ruhelage 5 ist die Betätigungseinheit 30 losgelöst zum Getriebe 20 positioniert. In Figur 6 ist die Betätigungseinheit 30 in einer Betätigungslage 6 gezeigt, bei der die Betätigungseinheit 30 in Wirkverbindung mit dem Getriebe 20 ist. Während der Notschlüssel 33 in den Aufnahmekörper 32 gesteckt wird, erfolgt eine translatorische Bewegung des Aufnahmekörpers 32 in Richtung des Übertragungsgliedes 21. In der Betätigüngslage 6 der Betätigungseinheit 30 liegt eine formschlüssige Verbindung zwischen beiden Bauteilen 30, 21 vor. Über eine anschließende Drehung des Notschlüssels 33 um die Achse 24 erfolgt eine Krafteinleitung in das Getriebe 20, welches letztendlich eine entsprechende Bewegung des Sperrgliedes 10 über den Hebel 22 bewirkt.

Das freie Ende des Aufnahmekörpers 32 erstreckt sich sowohl in Figur 5 als auch in Figur 6 in eine am Übertragungsglied 21 vorgesehene Hülse 27. Der Innenbereich der Hülse 27 sowie das freie Ende des Übertragungsgliedes 21 sind derart geometrisch ausgeführt, dass in der Betätigungslage 6 ein Formschluss der Betätigungseinheit 30 und des Übertragungsgliedes 21 vorliegt, so dass durch eine manuelle Drehbewegung des Notschlüssels 33 eine zuverlässige Aktivierung des Getriebes 20 erzielbar ist.

Gemäß Figur 7 weist das Getriebe 20 ein huberzeugendes Übertragungsglied 21 auf, das auf den Hebel 22 wirkt, der zwischen dem Übertragungsglied 21 und dem Sperrglied 13 bewegbar angeordnet ist. Ferner weist das Getriebe 20 eine Arretiervorrichtung 50 auf, die das Sperrglied 13 in seiner jeweiligen Stellung 1, 2 zuverlässig halten kann. Die Arretiervorrichtung 50 weist ein Verriegelungselement 51 auf, das in einer Kulisse 52 des Hebels 22 geführt ist. In der Kulisse 52 greift ein Nocken 53 des Verriegelungselementes 51 ein, welches in Figur 8 bis Figur 12 verdeutlicht ist. Das Verriegelungselement 51 ist derart an der Arretiervorrichtung 50 angeordnet, dass das Verriegelungselement 51 zwischen einer ersten Position 3 und einer zweiten Position 4 entlang der Kulisse 52 bewegbar ist. In der Verriegelungsstellung 1, die in Figur 7 und Figur 8 dargestellt ist, und in der Entriegelungsstellung 2, die in Figur 11 dargestellt ist, hält die Arretiervorrichtung 50 das Sperrglied 13 sichernd fest, während das Verriegelungselement 51 sich in der ersten herausgefahrenen Position 3 befindet. In der ersten Position 3 erstreckt sich das Verriegelungselement 51 in eine erste Aufnahmeöffnung 54a, die fest am Gehäuse der erfindungsgemäßen Vorrichtung10 angeordnet ist.

Das Verriegelungselement 51. ist beweglich am Sperrglied 13 gelagert, wobei es hierbei federbelastet am Sperrglied 13 angeordnet ist. Das Verriegelungselement 51 ist entlang einer Achse 12 linear verschiebbar aus der ersten 3 in die zweite Position 4 und umgekehrt verschiebbar. Gemäß Figur 7 weist das Übertragungsglied 21 eine spiralartige Kulissenführung 21a auf, in die der Hebel 22 mit einem vorsprungartigen Kontaktbereich 23 eingreift. Der Hebel 22 und das Sperrglied 13 sind hierbei um eine gemeinsame Achse 11 drehbar gelagert. Die Kulissenführung 21a ist an der dem Aufnahmekörper 32 abgewandten Seite des Übertragungsgliedes 21 angeordnet.

Um nun das Sperrglied 13 aus seiner Verriegelungsstellung 1 in Richtung der Entriegelungsstellung 2 zu bewegen (Aktionsvorgang 71a), nachdem eine positive Authentifizierung 70 stattgefunden hat, erfolgt eine Aktivierung des Betätigungselementes 31, wodurch die Lenkungsverriegelung 10 angesteuert wird. Anschließend erfolgt zunächst eine Drehung des Übertragungsgliedes 21 um seine Drehachse 24. Bezogen auf das Ausführungsbeispiel rotiert hierbei das Übertragungsglied 21 gemäß Figur 7 im Uhrzeigersinn um die Achse 24. Hierdurch wird bewirkt, dass der Kontaktbereich 23 entlang der Kulissenführung 21a gegen den Uhrzeigersinn um die Achse 11 verschwenkt wird. Die Drehung des Übertragungsgliedes 21 kann sowohl über die Aktivierung des Betätigungselements 31 in dem Normalbetrieb als auch über eine manuelle Betätigung der Betätigungselements 31 im Notfallbetrieb erfolgen.

Während der Hebel 22 gemäß Figur 7 gegen den Uhrzeigersinn um die Achse 11 verschwenkt wird, welches gemäß den Figuren 8 bis 11 einer Bewegung des Hebels 22 im Uhrzeigersinn um die Achse 11 entspricht, erfolgt eine Kraftübertragung auf das Sperrglied 13, das die Verriegelungsstellung 1 aus Figur 7 und Figur 8 verlässt und die Entriegelungsstellung 2 gemäß Figur 11 erreicht. Während sich der Hebel 22 ausgehend von Figur 8 um die Drehachse 11 mit dem Uhrzeigersinn verschwenkt, übt die Kulisse 52 des Hebels 22 eine Kraft auf den Nocken 53 des Verriegelungselementes 51 aus, wodurch das Verriegelungselement 51 in Richtung Achse 11 linear innerhalb des Sperrgliedes 13 bewegt wird. Hierdurch verlässt das Verriegelungselement 51 die erste Aufnahmeöffnung 54a. Die Kulisse 52 ist ferner mit einem ersten 52a, einem zweiten Anschlagbereich 52b sowie einem Arretierbereich 52c ausgeführt. Ausgehend von der Position des Nockens 53 gemäß Figur 8, der am Arretierbereich 52c der Kulisse 52 anliegt, bewegt sich der Nocken 53 in Richtung des ersten Anschlagbereiches 52a. Solange der Nocken 53 den ersten Anschlagbereich 52a des Hebels 22 nicht erreicht hat, erfolgt lediglich eine Linearverschiebung des Verriegelungselementes 51 entlang der Achse 12, ohne dass das Sperrglied 13 aus seiner Verriegelungsstellung 1 bewegt wird. Erst wenn der Nocken 53 gemäß Figur 10 am ersten Anschlagbereich 52a der Kulisse 52 anliegt und der Hebel 22 über das Übertragungsglied 21 weiter um die Achse 11 verschwenkt wird, erfolgt eine Kraftübertragung auf das Sperrglied 13, das aus der Verriegelungsstellung 1 in Richtung der Entriegelungsstellung 2 um die Achse 11 mitverschwenkt wird.

Ab einem bestimmten Drehwinkel des Hebels 22 erreicht das Verriegelungselement 51 eine zweite Aufnahmeöffnung 54b, welches in Figur 11 dargestellt ist. Ist diese Drehposition des Hebels 22 erreicht, drückt eine Feder, die innerhalb des Sperrgliedes 13 angeordnet ist, das Verriegelungselement 51 in die zweite Aufnahmeöffnung 54b hinein, wobei gleichzeitig der Nocken 53 des Verriegelungselementes 51 innerhalb der Kulisse 52 zum Arretierbereich 52c gedrückt wird und an dieser Stelle verbleibt. Zwischen der ersten 54a und der zweiten Aufnahmeöffnung 54b befindet sich ein Widerlager 55, gegen dieses das Verriegelungselement 51 während seiner Bewegung von der ersten 54a zur zweiten Aufnahmeöffnung 54b und umgekehrt mit seinem freien Ende entlang gleitet.

Ausgehend von der entriegelten Stellung 2, die in Figur 11 schematisch dargestellt ist, erfolgt der Verriegelungsvorgang (Aktionsvorgang 71b) in der Art, dass über eine entgegengesetzte Drehung des Übertragungsgliedes 21, das bedeutet gegen den Uhrzeigersinn gemäß Figur 7, der Hebel 22 mit seinem Kontaktbereich 23 entlang der Kulissenführung 21a geführt wird. Ausgehend von Figur 11 bedeutet dieses, dass der Hebel 22 gegen den Uhrzeigersinn um die Drehachse 11 verschwenkt wird, wobei gleichzeitig der Nocken 53 des Verriegelungselementes 51 von der Kulisse 52 des Hebels 22 aus dem Arretierbereich 52c in Richtung Achse 11 gedrückt wird.

Gleichzeitig bewegt sich der Nocken 53 in die Richtung des zweiten Anschlagbereiches 52b der Kulisse 52 bis der Nocken 53 tatsächlich am zweiten Anschlagbereich 52b anliegt.

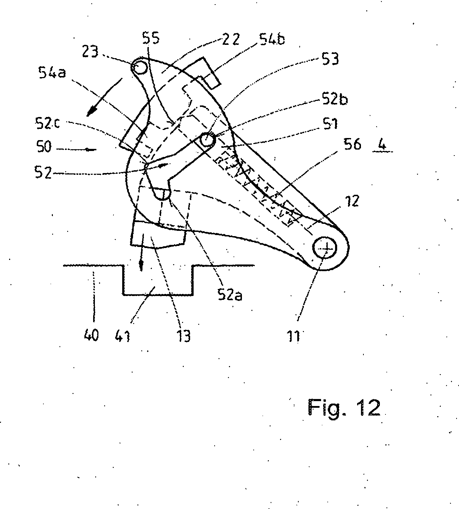

Während dieser Bewegung verbleibt das Sperrglied 13 unverändert in seiner Entriegelungsstellung 2. Gleichzeitig jedoch verlässt das Verriegelungselement 51 die zweite Aufnahmeöffnung 54b. Ist das Verriegelungselement 51 nicht mehr im Eingriff mit der zweiten Aufnahmeöffnung 54b, ist die zweite Position 4 des Verriegelungselementes 51 erreicht, bei der die der Achse 11 abgewandte.Seite des Verriegelungselementes 51 das Widerlager 55 kontaktiert. Erst bei Kontaktierung des zweiten Anschlagbereichs 52b durch den Nocken 53 erfolgt durch die entsprechende Bewegung des Hebels 22 gegen den Uhrzeigersinn um die Achse 11 eine Kraftübertragung auf das Sperrglied 13, das sich aus der Entriegelungsstellung 2 in Richtung der Verriegelungsstellung 1 bewegt, welches in Figur 12 angedeutet ist. Ist der entsprechende Drehwinkel des Hebels 22 erreicht, wird das Verriegelungselement 51 durch die innerhalb des Sperrgliedes 13 wirkende Feder 56 in die erste Aufnahmeöffnung 54a gedrückt, so dass der Verriegelungszustand gemäß Figur 8 erreicht ist.

Wie es gemäß der Figuren 8 bis 12 verdeutlicht ist, führt das Verriegelungselement 51, insbesondere der Nocken 53 während der Bewegung des Sperrgliedes 13 in seine jeweilige Stellung 1,2 eine pendelartige Bewegung relativ zum Hebel 22 innerhalb der Kulisse 52 aus. Das bedeutet, dass von der Verriegelungsstellung 1 in die Entriegelungsstellung 2 der Nocken 53 aus dem Arretierbereich 52c zunächst zum ersten Anschlagbereich 52a verläuft und anschließend wieder zurück zum Arretierbereich 52c gelangt. Von der Entriegelungsstellung 2 zur Verriegelungsstellung 1 hingegen pendelt der Nocken 53 ausgehend vom Arretierbereich 52c zunächst iri Richtung des zweiten Anschlagbereichs 52b bevor der Nocken 53 wiederum zurück in den Arretierbereich 52c geführt wird. Diese besondere Kinematik sorgt für einen zuverlässigen Funktionsablauf bei der Ansteuerung des Sperrgliedes 13, wobei gleichzeitig eine sehr kompakte Anordnung des Getriebes 20 erreicht wird. Die wesentlichen Elemente der Arretiervorrichtung 50, insbesondere das Verriegelungselement 51 sowie die Kontur der Kulisse 52 dienen gleichzeitig als notwendige Bestandteile des Getriebes 20, um eine entsprechende Kraftübertragung vom Übertragungsglied 21 über den Hebel 22 auf das Sperrglied 10 zu erreichen. Neben der eigentlichen Arretierfunktion des Verriegelungselementes 51 ist somit das Verriegelungselement 51 gleichzeitig ein wesentliches Bauteil des Getriebes 20, um das Sperrglied 13 in seine jeweilige Stellung 1, 2 zu bringen.

### Bezugszeichenliste

- 1: Verriegelungsstellung
- 2: Entriegelungsstellung
- 3: erste Position
- 4: zweite Position
- 5: Ruhelage
- 6: Betätigungslage
- 10: Lenkungsverriegelung
- 11: Achse
- 12: Achse
- 13: Sperrglied
- 20: Getriebe
- 21: Übertragungsglied
- 21a: Kulissenführung
- 22: Hebel
- 23: Kontaktbereich
- 24: Achse
- 25: Elektromotor
- 26: Verzahnungsbereich
- 27: Hülse
- 30: Betätigungseinheit
- 31: Betätigungselement
- 32: Aufnahmekörper
- 33: Notschlüssel
- 40: funktionswesentliches Bauteil
- 41: Nut
- 50: Arretiervorrichtung
- 51: Verriegelungselement
- 52: Kulisse
- 52a: erster Anschlagbereich
- 52b: zweiter Anschlagbereich
- 52c: Arretierbereich
- 53: Nocken
- 54a: erste Aufnahmeöffnung
- 54b: zweite Aufnahmeöffnung
- 55: Widerlager
- 56: Feder
- 60: Motorrad
- 61: Lenkungseinheit
- 62: Zündanlage
- 63: Steuerungssystem
- 64: ID-Geber
- 66: drittes Betätigungselement, Motorstartschalter
- 67: viertes Betätigungselement, Notausschalter
- 70: Authentifizierung
- 71a, 71b: Aktionsvorgang
- 72: Bereitstellungsvorgang
- 73: Motorstartvorgang
- 74: Motorbetrieb
- 75: Motorabschaltvorgang
- 76: Bordelektronikabschaltung
- 77: Ruhemodus

## Patentansprüche

1. Verfahren zum Betrieb eines Steuerungssystems (63) eines Motorrads (60) zur Überführung einer elektromechanischen Lenkungsverriegelung (10) von einer Entriegelungsstellung (2) in eine Verriegelungsstellung (1) und umgekehrt, mit
einer Zündanlage (62) zum Motorstart des Motorrads (60), die durch das Steuerungssystem (63) angesteuert wird,
einer Authentifizierung (70), bei dem ein ID-Geber (64) mit dem Steuerungssystem (63) in Datenkommunikation steht, wobei nach einer positiven Authentifizierung (70) in einem Aktionsvorgang (71a, 71 b) die Lenkungsverriegelung (10) in die jeweilige Stellung (1, 2) gebracht wird,
wobei ein mit dem Steuerungssystem (63) in Signalverbindung stehendes erstes Betätigungselement (31), das für einen Benutzer zugänglich ist, vorgesehen ist und der Aktionsvorgang (71a, 71b) erst nach der positiven Authentifizierung (70) über eine bewusste, nach der Authentifizierung (70) nachgeschalteten Aktivierung des ersten Betätigungselementes (31) startet,
**dadurch gekennzeichnet,**
**dass** das Steuerungssystem (63) während des Aktionsvorganges (71a, 71b) eine Ist-Stellung der Lenkungseinheit (61) mit einer Soll-Stellung überprüft, wobei
falls die Ist-Stellung der Soll-Stellung entspricht, wird die Lenkungsverriegelung (10) aus der Entriegelungsstellung (2) in die Verriegelungsstellung (1) gebracht,
falls die Ist-Stellung ungleich der Soll-Stellung ist, wird der Aktionsvorgang (71 b) abgebrochen,
wobei bei einem Abbruch des Aktionsvorganges (71b) der Benutzer eine Rückmeldung über eine Fehlstellung der Lenkungseinheit (61) erhält.

2. Verfahren nach Anspruch 1,
**dadurch gekennzeichnet,**
**dass** die Authentifizierung (70) kapazitiv, induktiv und/oder per Funk erfolgt.

3. Verfahren nach Anspruch 1 oder 2,
**dadurch gekennzeichnet,**
**dass** das erste Betätigungselement (31) an der Lenkungseinheit (61) des Motorrads (60) angeordnet ist und/oder dass die Authentifizierung (70) über das erste Betätigungselement (31) getrennt vom Aktionsvorgang (71a, 71 b) gestartet wird.

4. Verfahren nach einem der vorhergehenden Ansprüche,
**dadurch gekennzeichnet,**
**dass** über eine erneute bewusste Aktivierung eines zweiten Betätigungselements (31) nach dem Aktionsvorgang (71a), bei dem die Lenkungsverriegelung (10) in die Entriegelungsstellung (2) gebracht wurde, ein Bereitstellungsvorgang (72) initiiert wird, bei dem Energie der Zündanlage (62) zur Verfügung gestellt wird, wobei insbesondere über eine erneute Aktivierung eines dritten Betätigungselementes (66) der Motorstartvorgang (73) aktiviert wird, wobei insbesondere während des Aktionsvorganges (71a, 71b) in Abhängigkeit von der Stellung (1, 2) der Lenkungsverriegelung (10) das Steuerungssystem (63) die Stellung (1, 2) der Lenkungsverriegelung (10) wechselt.

5. Verfahren nach einem der vorhergehenden Ansprüche,
**dadurch gekennzeichnet,**
**dass** während des Motorbetriebes (74) ein Motorabschaltvorgang (75) über eine bewusste Aktivierung eines vierten Betätigungselementes (31, 67) ausgelöst wird, wobei das Steuerungssystem (63) der Zündanlage (62) die Bereitstellung der Energie unterbricht, wobei insbesondere der Motorabschaltvorgang (75) nur unter definierten Motorradzustandsbedingungen, die vom Steuerungssystem (63) überprüft werden, ausgelöst wird.

6. Verfahren nach Anspruch 5,
**dadurch gekennzeichnet,**
**dass** nach dem Motorabschaltvorgang (75) über eine erneute Aktivierung eines fünften Betätigungselementes (31) eine Bordelektronikabschaltung (76) erfolgt, wobei insbesondere nach der Bordelektronikabschaltung (76) über eine erneute Aktivierung des ersten oder des zweiten Betätigungselementes (31) die Lenkungsverriegelung (10) in die Verriegelungsstellung (1) gebracht wird.

7. Verfahren nach einem der vorhergehenden Ansprüche,
**dadurch gekennzeichnet,**
**dass** das Steuerungssystem (63) die Authentifizierung (70) nach der positiven Authentifizierung (70) wiederholt, insbesondere der Authentifizierungsvorgang (70) während des Aktionsvorganges (71a, 71 b) und/oder des Bereitstellungsvorganges (72) und/oder des Motorstartvorganges (73) und/oder des Motorabschaltvorganges (75) und/oder der Bordelektronikabschaltung (76) wiederholt wird.

8. Verfahren nach einem der vorhergehenden Ansprüche,
**dadurch gekennzeichnet,**
**dass** das erste (31), zweite (31) und das vierte Betätigungselement (31) ein gemeinsames Zentralbetätigungselement (31) bilden und/oder dass die Betätigungsdauern des Zentralbetätigungselementes (31) zur Aktivierung des Aktionsvorganges (71 a, 71 b) und des Bereitstellungsvorganges (72), insbesondere des Aktionsvorganges (71 a, 71b) und der Bordelektronikabschaltung (76) sich unterscheiden.

9. Verfahren nach einem der vorhergehenden Ansprüche,
**dadurch gekennzeichnet,**
**dass** das Steuerungssystem (63) in einen Ruhemodus (77) schaltet, falls nach einer positiven Authentifizierung (70) in einem definierten Zeitintervall keine Aktivierung des Zentralbetätigungselementes (31) erfolgt.

## Claims

1. A method for operating a control system (63) of a motorcycle (60) for transferring an electromechanical steering lock (10) from an unlocking position (2) into a locking position (1) and vice versa, comprising an ignition system (62) for starting the engine of the motorcycle (60), which is controlled by the control system (63),
an authentication (70), wherein an ID generator (64) is in data communication with the control system (63), wherein the steering lock (10) is brought into the respective position (1, 2) after a positive authentication (70) in an action procedure (71a, 71b),
wherein a first actuating element (31) in signal connection with the control system (63) is provided, said actuating element being accessible to a user, and the action procedure (71a, 71b) begins only after the positive authentication (70) by a deliberate activation of the first actuating element (31) occurring after the authentication (70),
**characterised in that**
the control system (63) checks an actual position of the steering unit (61) with a set-point position during the action procedure (71a, 71b), wherein
if the actual position corresponds to the set-point position, the steering lock (10) is brought out of the unlocking position (2) into the locking position (1),
if the actual position is not the same as the set-point position, the action procedure (71b) is terminated,
wherein the user receives feedback about an incorrect position of the steering unit (61) in the event of the action procedure (71b) being terminated.

2. The method according to claim 1,
**characterised in that**
the authentication (70) takes place capacitively, inductively and/or by radio.

3. The method according to claim 1 or 2,
**characterised in that**
the first actuating element (31) is disposed on the steering unit (61) of the motorcycle (60) and/or that the authentication (70) is started by the first actuating element (31) separate from the action procedure (71a, 71b).

4. The method according to any one of the preceding claims,
**characterised in that**,
by a renewed deliberate activation of a second actuating element (31) after the action procedure (71a), in which the steering lock (10) has been brought into the unlocking position (2), a make-ready procedure (72) is initiated in which the availability of energy to the ignition system (62) is made ready, wherein the engine start-up procedure (73) is activated in particular by a renewed activation of a third actuating element (66), wherein, in particular during the action procedure (71a, 71b), the control system (63) changes the position (1, 2) of the steering lock (10) depending on the position (1, 2) of the steering lock (10).

5. The method according to any one of the preceding claims,
**characterised in that**,
during the engine operation (74), an engine shutdown procedure (75) is triggered by a deliberate activation of a fourth actuating element (31, 67), wherein the control system (63) of the ignition system (62) interrupts the availability of the energy, wherein in particular the engine shutdown procedure (75) is triggered only under defined conditions of the motorcycle state, which are checked by the control system (63).

6. The method according to claim 5,
**characterised in that**,
by a renewed activation of a fifth actuating element (31) after the engine shutdown procedure (75), an on-board electronics shutdown (76) takes place, wherein, in particular after the on-board electronics shutdown (76), the steering lock (10) is brought into the locking position (1) by a renewed activation of the first or the second actuating element (31).

7. The method according to any one of the preceding claims,
**characterised in that**
the control system (63) repeats the authentication (70) after the positive authentication (70), in particular the authentication process (70) is repeated during the action procedure (71a, 71b) and/or the make-ready procedure (72) and/or the engine start-up procedure (73) and/or the engine shutdown procedure (75) and/or the on-board electronics shutdown (76).

8. The method according to any one of the preceding claims,
**characterised in that**
the first (31), second (31) and the fourth actuating element (31) constitute a common central actuating element (31) and/or that the actuation times of the central actuating element (31) differ for the activation of the action procedure (71a, 71b) and the make-ready procedure (72), in particular the action procedure (71a, 71b) and the on-board electronics shutdown (76).

9. The method according to any one of the preceding claims,
**characterised in that**
the control system (63) switches into a rest mode (77) if, after a positive authentication (70), no activation of the central actuating element (31) takes place within a defined time interval.

## Revendications

1. Procédé pour faire fonctionner un système de commande (63) d'une motocyclette (60), afin de faire passer un verrouillage de direction électromécanique (10) d'une position de déverrouillage (2) dans une position de verrouillage (1) et vice-versa, avec un dispositif d'allumage (62), qui sert au démarrage du moteur de la motocyclette (60) et qui est commandé par le système de commande (63),
avec une authentification (70) selon laquelle un identificateur (64) se trouve en communication de données avec le système de commande (63), sachant qu'à la suite d'une authentification positive (70), le verrouillage de direction (10) est amené dans la position respective (1, 2) par un processus d'actionnement (71a, 71b),
sachant qu'il est prévu un premier élément d'actionnement (31), qui est accessible pour un utilisateur et qui se trouve en liaison de signaux avec le système de commande (63), et sachant que le processus d'actionnement (71a, 71b) ne démarre qu'après l'authentification positive (70), au moyen d'une activation délibérée du premier élément d'actionnement (31) qui est consécutive à l'authentification (70),
**caractérisé en ce que**, pendant le processus d'actionnement (71a, 71 b), le système de commande (63) compare une position réelle de l'unité de direction (61) à une position de consigne,
sachant que si la position réelle correspond à la position de consigne, le verrouillage de direction (10) est amené de la position de déverrouillage (2) dans la position de verrouillage (1),
et que si la position réelle est différente de la position de consigne, le processus d'actionnement (71b) est interrompu,
sachant que lors d'une interruption du processus d'actionnement (71b), l'utilisateur reçoit une information en retour sur la mauvaise position de l'unité de direction (61).

2. Procédé selon la revendication 1, **caractérisé en ce que** l'authentification (70) s'effectue de manière capacitive, de manière inductive et/ou par radio.

3. Procédé selon la revendication 1 ou 2, **caractérisé en ce que** le premier élément d'actionnement (31) est disposé sur l'unité de direction (61) de la motocyclette (60), et/ou **en ce que** l'authentification (70) est démarrée au moyen du premier élément d'actionnement (31) séparément du processus d'actionnement (71 a, 71 b).

4. Procédé selon l'une des revendications précédentes, **caractérisé en ce que**, au moyen d'une nouvelle activation délibérée d'un deuxième élément d'actionnement (31) à la suite du processus d'actionnement (71a) par lequel le verrouillage de direction (10) a été amené dans la position de déverrouillage (2), on déclenche un processus (72) de mise à disposition par lequel de l'énergie est mise à la disposition du dispositif d'allumage (62), sachant notamment que le processus (73) de démarrage du moteur est activé au moyen d'une nouvelle activation d'un troisième élément d'actionnement (66), sachant notamment que, pendant le processus d'actionnement (71a, 71 b), le système de commande (63) change la position (1, 2) du verrouillage de direction (10) en fonction de la position (1, 2) du verrouillage de direction (10).

5. Procédé selon l'une des revendications précédentes, **caractérisé en ce que**, pendant le fonctionnement du moteur (74), un processus (75) d'arrêt du moteur est déclenché au moyen d'une action délibérée d'un quatrième élément d'actionnement (31, 67), sachant que le système de commande (63) du dispositif d'allumage (62) interrompt la mise à disposition d'énergie, sachant notamment que le processus (75) d'arrêt du moteur n'est déclenché que dans des conditions définies d'état de la motocyclette, qui sont contrôlées par le système de commande (63).

6. Procédé selon la revendication 5, **caractérisé en ce que**, à la suite du processus (75) d'arrêt du moteur, un arrêt (76) de l'électronique de bord est effectué au moyen d'une nouvelle activation d'un cinquième élément d'actionnement (31), sachant notamment qu'à la suite de l'arrêt (76) de l'électronique de bord, le verrouillage de direction (10) est amené dans la position de verrouillage (1) au moyen d'une nouvelle activation du premier ou du deuxième élément d'actionnement (31).

7. Procédé selon l'une des revendications précédentes, **caractérisé en ce que** le système de commande (63) répète l'authentification (70) à la suite de l'authentification positive (70), en particulier **en ce que** le processus d'authentification (70) est répété pendant le processus d'actionnement (71a, 71b) et/ou le processus (72) de mise à disposition et/ou le processus (73) de démarrage du moteur et/ou le processus (75) d'arrêt du moteur et/ou l'arrêt (76) de l'électronique de bord.

8. Procédé selon l'une des revendications précédentes, **caractérisé en ce que** le premier élément d'actionnement (31), le deuxième élément d'actionnement (31) et le quatrième élément d'actionnement (31) forment un élément central d'actionnement commun (31), et/ou **en ce que** les durées d'actionnement de l'élément central d'actionnement (31) pour l'activation du processus d'actionnement (71a, 71b) et pour l'activation du processus (72) de mise à disposition, en particulier du processus d'actionnement (71a, 71b) et de l'arrêt (76) de l'électronique de bord, sont différentes.

9. Procédé selon l'une des revendications précédentes, **caractérisé en ce que** le système de commande (63) effectue la commutation dans un mode de repos (77) en l'absence d'activation de l'élément central d'actionnement (31) dans un intervalle de temps défini à la suite d'une authentification positive (70).
